# EUROPEAN PATENT SPECIFICATION

(11) **EP 3 516 720 B1**
(45) Date of publication and mention of the grant of the patent: **11.11.2020**
(21) Application number: 17780898.7
(22) Date of filing: 22.09.2017
(51) Int. Cl.: H01M 8/0232, H01M 8/0245, H01M 8/1018

(54) **A FUEL CELL COMPONENT**
BRENNSTOFFZELLENKOMPONENTE
COMPOSANT DE PILE À COMBUSTIBLE

(30) Priority: 23.09.2016 GB 201616233
(43) Date of publication of application: 31.07.2019
(73) Proprietor: University of Cape Town, 7700 Cape Town (ZA)
(72) Inventor: TANAKA, Shiro, Kameoka Kyoto 621-0005 (JP)
(74) Representative: Prock, Thomas
(86) International application number: PCT/IB2017/055768
(87) International publication number: WO 2018/055567

(56) References cited:
- WO-A2-2015/145406
- JP-A- 2004 186 116
- US-A1- 2005 130 028
- US-B1- 6 562 507
- TANAKA SHIRO ET AL: "Numerical and experimental study of the effects of the electrical resistance and diffusivity under clamping pressure on the performance of a metallic gas-diffusion layer in polymer electrolyte fuel cells", JOURNAL OF POWER SOURCES, ELSEVIER SA, CH, vol. 330, 13 September 2016 (2016-09-13), pages 273-284, XP029743240, ISSN: 0378-7753, DOI: 10.1016/J.JPOWSOUR.2016.08.121

## Description

### FIELD OF THE INVENTION

The present invention relates to a fuel cell, more particularly, to a component for a fuel cell having a bipolar plate, a metal gas diffusion layer and a catalyst coated membrane adjoining at interfaces therebetween so as to form a laminate. The fuel cell component is suitable for incorporation into an electricity generating fuel cell assembly.

### BACKGROUND TO THE INVENTION

Fuel cells can be used to generate electricity for a variety of applications including automobiles, aeroplanes and mobile communication antennae. In particular, fuel cells have been proposed as an environmentally benign alternative to internal combustion engines in automobiles. Fuel cells produce electricity by catalytically combining hydrogen and oxygen gas in a process that produces water as a side-product. Although the amount of power generated by a single fuel cell is low, combining multiple fuel cells together in a stack generates sufficient power to propel an automobile or an aeroplane. Depending on the application, fuel cell stacks typically comprise several hundred individual fuel cells connected in series.

An individual fuel cell has a multi-layered structure that includes a bipolar plate (BPP), a gas diffusion layer (GDL), a microporous layer (MPL) and a catalyst coated membrane (CCM) which together form a laminate. The layers are sealed together with gaskets provided between interfaces of the layers about outer perimeters thereof. The gaskets prevent gases from leaking out from a central pressurized area of the fuel cell which is where the catalytic reaction takes place. When the fuel cell is assembled, the various layers are compressed together in order to maximize electrical contact between the layers, minimize the overall thickness of the cell, and increase the seal of the gaskets.

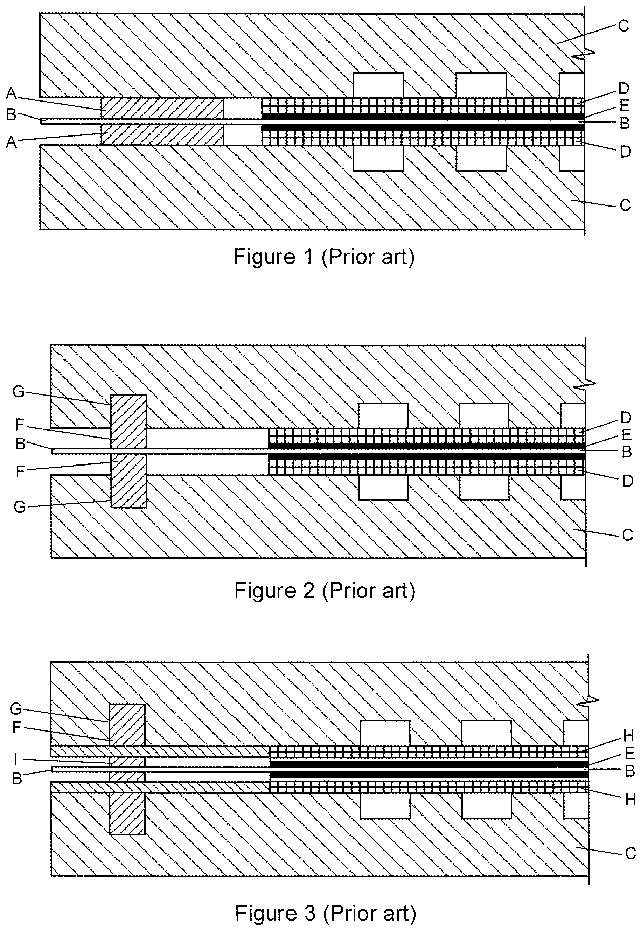

The prior art includes a first example of a fuel cell, as shown in Figure 1, where two sheet-type gaskets (A) are used to seal the interfaces between the CCM (B) and two BPPs (C). A carbon-fibre GDL (C-GDL) (D) is provided opposite the catalyst layer (E) of the CCM and against the BPP. When the layers are compressed together during assembly of the fuel cell, a contacting surface of the BPP contacts both the gasket and the C-GDL. The C-GDL is compressible and can be compressed against the catalyst layer until the thickness of the gasket and C-GDL are approximately equivalent, enabling the gasket to seal the interfaces between the BPP and CCM.

The compressibility of the C-GDL also enables contact resistance between the catalyst layer and the BPP to be minimized. The fuel cell is typically held together by sandwiching the layers between two end plates connected with several tie-rods (not shown) that extend around the perimeter.

A second example of a known fuel cell is illustrated in Figure 2. Here an O-ring-type gasket (F) is used to seal the interface between the BPP (C) and CCM (B). A groove (G) provided in the BPP receives the gasket, which is deformed into the groove during compression. The C-GDL (D) is also compressed to increase electrical contact between the catalyst layer (E) and BPP.

Both these examples rely on the compressibility of the C-GDL to enable the gasket to seal the interface between the BPP and membrane and to provide sufficient electrical contact between the BPP and catalyst layer.

Recently, some fuel cells utilizing a metal GDL (M-GDL) have been developed. The M-GDL includes a stainless steel or similar suitable metal sheet (Ti, Cu, Al or a metal alloy) having perforations or apertures extending through the sheet. The M-GDL is interposed between the CCM and BPP. In this case, a sheet-type gasket cannot be used, or is difficult to use, because the metal sheet is not compressible and any thickness differences between the M-GDL and gasket cannot be equalized by compressing the M-GDL. Sheet gaskets are typically not deformable when compressed between two flat surfaces of a fuel cell because there is no surrounding space into which the gasket may deform when compressed. In order to have a uniform level of contact between the BPP and M-GDL along their respective surfaces, the thickness of the sheet gasket must be controlled to be exactly equivalent to the thickness of the catalyst layer and M-GDL. In practice this is difficult to achieve with the result either being a poor seal or poor contact between the BPP, M-GDL and catalyst layers.

An O-ring type gasket may be used to seal the interface between the CCM and BPP when a M-GDL is used, provided that the volume defined by the groove is large enough to accommodate the O-ring in a deformed condition. However, in order for a groove to be large enough to accommodate the deformed O-ring, the BPP must be sufficiently thick to house the groove. This causes the BPPs making up the fuel cell stack to be thicker than desired when an O-ring type gasket is used.

A known fuel cell arrangement is illustrated in Figure 3 and involves the use of an O-ring type outer gasket (F) to seal the interface between the BPP and M-GDL (H), and a thinner sheet gasket (I) to seal the interface between the M-GDL and the CCM. However, this arrangement requires a groove or channel (G) to be formed in the BPP to accommodate the O-ring and the combination of gaskets increases the overall fuel cell stack volume. As mentioned above, the groove for the O-ring requires the BPP to be thicker than desired and this may limit the extent to which the stack volume can be reduced. Furthermore, a fuel cell made according to this arrangement is difficult and laborious to assemble as the CCM and BPP must be precisely aligned with each of the sheet and O-ring gaskets.

GDLs are typically coated with a hydrophobic polymeric coating, such as polytetrafluoroethylene (PTFE), to prevent water accumulating within their pores and on their surfaces during operation of the fuel cell. The surface of a C-GDL is rough owing to the assembled carbon fibres. This roughness prevents the PTFE coating from completely covering the outer surfaces of the carbon fibres which enables the C-GDL to maintain an electrically conductive interface with the BPP. The PTFE coating thus does not hinder electron transfer to the BPP. The PTFE coated rough surface of the C-GDL also maintains its hydrophobicity. The same cannot be said for M-GDLs. Partially or entirely coating the surface of a M-GDL with PTFE can result in the PTFE coating preventing enough direct contact between the M-GDL and the BPP for the contact resistance to increase and the cell voltage to decrease as a result. This is a common problem associated with M-GDLs and it affects the performance of a fuel cell that uses M-GDLs. Where a PTFE coating is not used, water accumulation on the hydrophilic metal surface may also result in a reduction of performance. The benefit, however, of using M-GDLs is that they are usually thinner than C-GDLs, which is an important property for any component of a fuel cell to have. Furthermore, C-GDLs tend to be brittle and prone to fracturing, whereas M-GDLs are more resilient. M-GDLs are also more electrically and thermally conductive, which serves to enhance performance especially in higher current density operations, where the IR drop effect and heat removal effect are larger. There are therefore advantages and disadvantages to each type of GDL.

The preceding discussion of the background to the invention is intended only to facilitate an understanding of the present invention. It should be appreciated that the discussion is not an acknowledgment or admission that any of the material referred to was part of the common general knowledge in the art as at the priority date of the application.

US2005/130028 discloses a fuel cell that includes a laminated, plate-shaped membrane electrode assembly and first and second separator plates sandwiching the membrane electrode assembly. The membrane electrode assembly includes a polymer electrolyte membrane; first and second electrode layers sandwiching the polymer electrolyte membrane; and first and second gas-diffusion layers disposed on an outer side of the electrode layers, respectively. The first and second gas-diffusion layers are made of an air-permeable metallic material. An arithmetic average roughness Ra of a surface of the air-permeable metallic material on the side contacting one of the electrode layers is in a range of 0.1 mum<=Ra<=1.0 mum.

WO2015/145406 discloses a membrane electrode assembly for use as a transport layer in polymer electrolyte fuel cells, the assembly comprising a porous metal gas diffusion layer (GDL) (20) and a catalyst layer (40) with a microporous layer (MPL) (30) interposed between them, the MPL (30) being constructed to fill the pores of the GDL (20) and coat the surface thereof.

### SUMMARY OF THE INVENTION

In accordance with a first aspect of this invention there is provided a component for a fuel cell which includes a metal gas diffusion layer (M-GDL) plate and a bipolar plate (BPP), the M-GDL having a diffusion area in which a plurality of apertures extend through the M-GDL and a frame area substantially surrounding the diffusion area, and the BPP having a plurality of gas flow channels on a surface thereof to define a flow field area, and characterised in that the frame area is laminated to the BPP to create a fluid impervious seal between the M-GDL and BPP about the frame area.

A further feature of the invention provides for at least a part of the flow field area to be laminated to the diffusion area.

Still further features provide for the lamination to be provided by welding or soldering, and in a preferred embodiment, for the lamination to be provided by welding.

An even further feature provides for the apertures of the diffusion area to be in fluid communication with at least some of the gas flow channels.

Yet further features provide for the lamination to be such that it reduces contact resistance between the part of the flow field area that is laminated to the diffusion area, and for the reduced contact resistance to be less than 1 x 10⁻⁷ Ωm² when a compression pressure of less than 0.05 MPa is applied to the M-GDL and BPP.

Still further features provide for the frame area to have a grid configuration with a plurality of holes defined in the grid configuration; and for at least some of the holes to extend through the M-GDL.

Even further features provide for a catalyst coated membrane (CCM) to be provided adjacent the M-GDL on an opposite side to the BPP, the CCM having a catalyst area and a catalyst-free area with the catalyst-free area substantially surrounding the catalyst area, and for a gasket to be provided between the frame area of the M-GDL and the catalyst-free area of the CCM, the gasket substantially surrounding the diffusion area of the M-GDL and catalyst area of the CCM, wherein the gasket is deformable when compressed and arranged to bulge at least partially into the holes defined in the grid formation.

Yet further features provide for sections of the M-GDL opposite the channels of the flow field area to be coated with a hydrophobic polymer, for sections of the M-GDL in contact with the flow field area to be partially coated with a hydrophobic polymer or uncoated, and for the hydrophobic polymer to be polytetrafluoroethylene (PTFE).

Still further features provide for the M-GDL to be coated with gold on at least a surface opposite the surface laminated to the BPP.

In accordance with a second aspect of this invention there is provided a component for a fuel cell including a metal gas diffusion layer (M-GDL) plate and a bipolar plate (BPP), the M-GDL having a diffusion area in which a plurality of apertures extend through the M-GDL and having a frame area substantially surrounding the diffusion area, the frame area having a grid configuration with a plurality of holes defined in the grid configuration, and the BPP having a plurality of gas flow channels on a surface thereof to define a flow field area, and characterised in that the M-GDL is laminated to the BPP.

Further features provide for a catalyst coated membrane (CCM) to be provided adjacent the M-GDL on an opposite side to the BPP, the CCM having a catalyst area and a catalyst-free area with the catalyst-free area substantially surrounding the catalyst area, and for a gasket to be provided between the frame area of the M-GDL and the catalyst-free area of the CCM, the gasket substantially surrounding the diffusion area of the M-GDL and catalyst area of the CCM, wherein that the gasket is deformable when compressed and arranged to bulge at least partially into the holes defined in the grid formation.

Still further features provide for at least a part of the flow field area to be laminated to the diffusion area, and for the lamination to be such that it reduces contact resistance between the part of the flow field area that is laminated to the diffusion area to less than 1 x 10⁻⁷ Ωm² when a compression pressure of less than 0.05 MPa is applied to the M-GDL and BPP.

Even further features provide for sections of the M-GDL opposite the channels of the flow field area to be coated with a hydrophobic polymer, and for sections of the M-GDL in contact with the flow field area to be either partially coated with a hydrophobic polymer or uncoated.

Yet further features provide for the M-GDL to be coated with gold on at least a surface opposite the surface laminated to the BPP.

In accordance with a third aspect of this invention there is provided a method of manufacturing a component of a fuel cell which includes aligning a metal gas diffusion layer (M-GDL) plate and a bipolar plate (BPP), the M-GDL having a diffusion area in which a plurality of apertures extending through the M-GDL are located and having a frame area substantially surrounding the diffusion area, and the BPP having a plurality of gas flow channels defining a flow field area on a surface thereof, and laminating the frame area to the BPP to create a fluid impervious seal between the M-GDL and BPP about the frame area.

Further features provide for at least a part of the flow field area to be laminated to the diffusion area.

Still further features provide for the lamination to be provided by welding or soldering, and in a preferred embodiment, for the lamination to be provided by welding.

Even further features provide for the apertures of the diffusion area to be in fluid communication with at least some of the gas flow channels.

Yet further features provide for the lamination to be such that it reduces contact resistance between the part of the flow field area that is laminated to the diffusion area, and for the contact resistance to be less than 1 x 10⁻⁷ Ωm² when a compression pressure of less than 0.05 MPa is applied to the M-GDL and BPP.

Still further features provide for the frame area to have a grid configuration with a plurality of holes defined in the grid configuration, and for at least some of the holes to extend through the M-GDL.

Even further features provide for a catalyst coated membrane (CCM) to be provided adjacent the M-GDL on an opposite side to the BPP, the CCM having a catalyst area and a catalyst-free area with the catalyst-free area substantially surrounding the catalyst area, and for a gasket to be provided between the frame area of the M-GDL and the catalyst-free area of the CCM, the gasket substantially surrounding the diffusion area of the M-GDL and catalyst area of the CCM, wherein the gasket is deformable when compressed and arranged to bulge at least partially into the holes defined in the grid formation.

Yet further features provide for sections of the M-GDL opposite the channels of the flow field area to be coated with a hydrophobic polymer, for sections of the M-GDL in contact with the flow field area to be partially coated with a hydrophobic polymer or uncoated, and for the hydrophobic polymer to be polytetrafluoroethylene (PTFE).

A still further feature provides for the M-GDL to be coated with gold on at least a surface opposite the surface laminated to the BPP.

In accordance with a fourth aspect of this invention there is provided a method of manufacturing a component of a fuel cell, the method including aligning a metal gas diffusion layer (M-GDL) plate and a bipolar plate (BPP), the M-GDL having a diffusion area in which a plurality of apertures extending through the M-GDL are located and having a frame area substantially surrounding the diffusion area, the frame area having a grid configuration with a plurality of holes defined in the grid configuration, and the BPP having a plurality of gas flow channels defining a flow field area on a surface thereof, and adjoining the M-GDL to the BPP by lamination.

Further features provide for a catalyst coated membrane (CCM) to be provided adjacent the M-GDL on an opposite side to the BPP, the CCM having a catalyst area and a catalyst-free area with the catalyst-free area substantially surrounding the catalyst area, and a gasket to be provided between the frame area of the M-GDL and the catalyst-free area of the CCM, the gasket substantially surrounding the diffusion area of the M-GDL and catalyst area of the CCM, wherein the gasket is deformable when compressed and arranged to bulge at least partially into the holes defined in the grid configuration.

Still further features provide for at least a part of the flow field area to be laminated to the diffusion area, and for the lamination to be such that it reduces contact resistance between the part of the flow field area that is laminated to the diffusion area to less than 1 x 10⁻⁷ Ωm² when a compression pressure of less than 0.05 MPa is applied to the M-GDL and BPP.

Even further features provide for sections of the M-GDL opposite the channels of the flow field area to be coated with a hydrophobic polymer, and for sections of the M-GDL in contact with the flow field area to be either partially coated with a hydrophobic polymer or uncoated.

A yet further feature provides for the M-GDL to be coated with gold on at least a surface opposite the surface laminated to the BPP.

An embodiment of the invention will now be described, by way of example only, with reference to the accompanying drawings.

### BRIEF DESCRIPTION OF THE DRAWINGS

In the drawings:
- Figure 1: is a sectional view of part of a first prior art fuel cell arrangement;
- Figure 2: is a sectional view of part of a second prior art fuel cell arrangement;
- Figure 3: is a sectional view of part of a third prior art fuel cell arrangement;
- Figure 4: is an exploded three dimensional view of one embodiment of a fuel cell component of the present invention;
- Figure 5: is a more detailed exploded three dimensional view of a part of the fuel cell component in Figure 4 illustrating the relative orientations of the BPP, M-GDL and sheet gasket;
- Figure 6: is a sectional view of part of the fuel cell component in Figure 4;
- Figure 7: is a three dimensional view of part of the M-GDL and BPP in Figure 4;
- Figure 8: is a graph showing the polarization curves for (a) PTFE coating with ultrasonic-welding, (b) PTFE coating without any welding, and (c) uncoated M-GDL; and
- Figure 9: is a graph illustrating the results obtained from experiments in which a M-GDL and a BPP are compressed together at a range of applied pressures and contact resistances measured at each applied pressure.

### DETAILED DESCRIPTION WITH REFERENCE TO THE DRAWINGS

A component for a fuel cell is provided and includes a metal gas diffusion layer (M-GDL) plate and a bipolar plate (BPP) which adjoin each other. The M-GDL plate has a diffusion area in which a plurality of apertures extend through the M-GDL and a frame area substantially surrounding the diffusion area. The BPP has a plurality of gas flow channels on the surface defining a flow field area. The gas flow channels correspond generally to the diffusion area of the M-GDL and are provided by grooves in the surface of the BPP with each groove being bordered by lands. The M-GDL and BPP are in contact with each other at an interface between the diffusion area and the flow field area wherein the apertures of the diffusion area are in fluid communication with at least some of the gas flow channels.

The diffusion area of the M-GDL may be substantially surrounded by a frame area and the frame area may have a grid configuration with a plurality of holes therein. The holes may extend through the M-GDL. Alternatively the holes could be depressions provided on at least an opposite side of the M-GDL to the BPP.

Importantly, the M-GDL and the BPP are laminated to each other. The frame area of the M-GDL may be laminated to the BPP to create a fluid impervious seal between the M-GDL and BPP at least about the frame area of the M-GDL.

Here and throughout the specification "laminate" refers to a process and/or a product of layering two or more substantially flat components against each other and adhering the layers together. The layers may be adhered by welding or soldering. "Laminate" therefore excludes a process and a product of merely layering two or more substantially flat components against each other without adhering the layers together. Such components may be described as "unlaminated".

The frame area of the M-GDL may be laminated to the BPP by welding or soldering. Preferably the lamination is carried out by a suitable method of welding, such as ultrasonic welding or diffusion welding.

The lamination may be limited to the frame area of the M-GDL and to a periphery of the BPP surrounding the flow field area. A part of the flow field area and diffusion area may also be laminated together along some, preferably all, of the lands.

Contact resistance between the part of the flow field area that is laminated to the diffusion area may be reduced relative to an unlaminated M-GDL and BPP. The lamination may be such that it reduces contact resistance between the part of the flow field area that is laminated to the diffusion area. This reduced contact resistance may be less than 1 x 10⁻⁷ Ωm² when a compression pressure of less than 0.05 MPa is applied to the M-GDL and BPP.

Contact resistance refers to the contribution to the overall electrical resistance of the fuel cell which is attributable to the contacting interfaces of the M-GDL and BPP. The contact resistance increases where there is an obstruction between the contacting interfaces, such as a non-electrically conductive coating over one or both of the contacting surfaces, or through corrosion, moisture, or particulate matter interfering with the electrical contact. Laminating the M-GDL to the BPP may reduce contact resistance by increasing the surface areas of the M-GDL and BPP that are in contact at the contacting interfaces.

The M-GDL and BPP may include aligned eyelets through which fuel gases (including hydrogen gas and air) and coolant enters or exhausts the fuel cell, and the M-GDL and BPP may be laminated together about the perimeter of each eyelet.

An outer perimeter of the M-GDL may substantially correspond with an outer perimeter of the BPP so that the M-GDL and BPP are aligned to have substantially equivalent major dimensions in the laminate.

Furthermore, at least a surface of the M-GDL opposite the BPP may be coated with a hydrophobic polymer, such as PTFE, prior to lamination and any suitable method can be used to coat the M-GDL, including spray coating and dip coating. The coating may be limited to sections of the M-GDL opposite the channels of the flow field area, with sections of the M-GDL in contact with the flow field area being partially coated or uncoated. Where surfaces of the diffusion area that are in contact with the flow field area have been coated, the coating may be eroded or broken down by the lamination to a sufficient extent to reduce contact resistance between at least a part of the flow field area and the diffusion area relative to an unlaminated M-GDL and BPP. The reduced contact resistance resulting from this lamination may be less than 1 x 10⁻⁷ Ωm² when a compression pressure of less than 0.05 MPa is applied to the M-GDL and BPP.

A catalyst coated membrane (CCM) is provided adjacent the M-GDL on an opposite side to the BPP. The CCM includes a catalyst area and a catalyst-free area, with the catalyst-free area substantially surrounding the catalyst area. The gas flow channels of the BPP and apertures in the M-GDL are in flow communication with the catalyst area.

A gasket is provided between the CCM and the M-GDL. The gasket is preferably interposed between the frame area of the M-GDL and the catalyst-free area of the CCM so that it substantially surrounds the diffusion area of the M-GDL and the catalyst area of the CCM. The gasket is deformable when compressed and arranged to bulge at least partially into the holes in the grid frame area of the M-GDL.

The gasket may be a solid gasket manufactured from any suitable polymeric material, such as silicone, fluoric polymer (e.g. PTFE), rubber, or hydrocarbon. Alternatively, the gasket may be applied as a curable liquid and is manufactured from a liquid polymeric material, such as silicone.

A microporous layer (MPL) may be interposed between the CCM and the M-GDL, preferably, between the catalyst area of the CCM and the diffusion area of the M-GDL. The MPL includes a carbon substrate having hydrophobic particles interspersed therein. The carbon substrate may be provided by carbon nanoparticles and the hydrophobic particles may be provided by PTFE sub-micron sized particles.

In some embodiments of the invention, the M-GDL may be coated with gold on a surface opposite the surface laminated to the BPP. Typically, this is the surface in contact with the MPL.

The fuel cell component as defined above can be manufactured by a method that includes aligning the M-GDL plate and BPP and adjoining them to each other at an interface between the diffusion area of the M-GDL and the flow field area of the BPP. Importantly, the M-GDL can be laminated to the BPP. The laminate may be arranged so that the apertures of the diffusion area are in fluid communication with at least some of the gas flow channels. In some embodiments, the frame area of the M-GDL is laminated to the BPP to create a fluid impervious seal between the M-GDL and BPP at least about the frame area. At least a part of the diffusion area may be laminated to the flow field area along some, preferably all, of the lands. The lamination may be such that it reduces contact resistance between the flow field area and the diffusion area relative to an unlaminated M-GDL and BPP. The contact resistance may be less than 1 x 10⁻⁷ Ωm² when a compression pressure of less than 0.05 MPa is applied to the M-GDL and BPP.

"Aligning" here means that the M-GDL plate and BPP are arranged in a face-to-face orientation with the outer peripheral edge of the M-GDL substantially corresponding with the outer peripheral edge of the BPP so that the apertures of the diffusion area are positioned in fluid communication with the gas flow channels. Corresponding eyelets on each plate may be used to align the M-GDL and BPP.

The lamination may be carried out by any suitable process, including welding and soldering. Where the lamination is by welding, the welding may be carried out by any suitable method including ultrasonic welding or diffusion welding.

The method may include adjoining a catalyst coated membrane (CCM) having a catalyst area substantially surrounded by a catalyst-free area adjacent the M-GDL on an opposite side to the BPP with the catalyst area in flow communication with at least some of the gas flow channels of the M-GDL and the apertures of the BPP. The method may also include interposing a gasket between the CCM and the M-GDL, preferably extending between a frame area of the M-GDL and the catalyst-free area of the CCM so as to substantially surround the catalyst area and form a fluid impervious seal at least about the catalyst area. In embodiments in which the frame area of the M-GDL has a grid configuration, the gasket can be deformable when compressed and arranged to bulge at least partially into the holes defined in the grid structure when the M-GDL and BPP are adjoined.

The method may further comprise introducing a microporous layer (MPL) between the CCM and the M-GDL, particularly between the catalyst area of the CCM and the diffusion area of the M-GDL. The MPL may include a carbon substrate having hydrophobic particles interspersed therein. The carbon substrate may be provided by carbon nanoparticles and the hydrophobic particles may be provided by PTFE sub-micron sized particles.

A step of coating sections of the M-GDL opposite the channels of the flow field area with a hydrophobic polymer, such as polytetrafluoroethylene (PTFE), may further be provided. The coating may be performed so that sections of the M-GDL in contact with the flow field area are partially coated or uncoated.

The method may also include coating the M-GDL with gold on at least a surface opposite the surface laminated to the BPP. Typically, this is the surface in contact with the MPL.

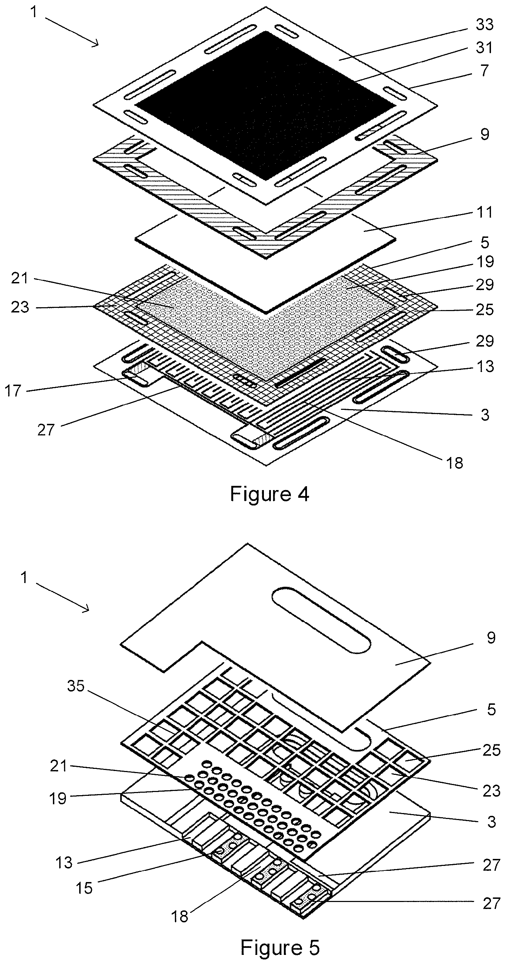

One embodiment of a fuel cell component (1) is illustrated in Figures 4-7 and includes a bipolar plate (BPP) (3), a metal gas diffusion layer (M-GDL) plate (5), a catalyst coated membrane (CCM) (7), and a gasket (9) and microporous layer (MPL) (11) interposed between the M-GDL (5) and CCM (7). These are arranged in a laminar configuration.

The BPP (3) has a plurality of gas flow channels (13) that extend about its surface. The channels (13) are provided by a plurality of elongate grooves connected at their ends with each groove bordered by lands (15) to form an alternating array of grooves (13) and lands (15). In some embodiments the channels may be a plurality of parallel straight channels, for example, 10, 11, 12, 13, 14 or 15 straight channels. In other embodiments the channels may be provided by a plurality of parallel serpentine channels, for example, 3, 4, 5 or 6 serpentine channels. The gas flow channels (13) are in fluid communication with an inlet (17) through which hydrogen gas at the anode and air at the cathode (not shown) enters the fuel cell. The channels (13) extend substantially across a flow field (18) of the BPP (3) in a patterned arrangement that assists in distributing hydrogen gas or air across the flow field (18). In this embodiment the gas flow channels (13) have a width that is greater than about 100 µm, preferably from about 200 µm to about 1000 µm. Also in this embodiment, the lands (15) have a width of less than 300 µm, preferably from about 10 µm to about 100 µm.

The M-GDL (5) has a central diffusion area (19) wherein a plurality of apertures (21) extending through the M-GDL (5) are located. The apertures (21) serve to direct gases from the gas flow channels (13) to the CCM (7) and the diffusion area (19) is thus complementary to the flow field (18) in the BPP (3). In this embodiment the diffusion area (19) is surrounded by a frame (23) which has a grid configuration with a plurality of holes (25) extending through the M-GDL (5). The holes may be any suitable shape such as square, triangular, rectangular, rhomboid or hexagonal. The thickness of the M-GDL (5) is less than about 100 µm, preferably from about 5 µm to about 50 µm, and more preferably from about 20 µm to about 40 µm. The thickness is selected to minimise the gas diffusion distance between the BPP and CCM while providing the M-GDL with sufficient rigidity to distribute pressure uniformly across the CCM.

The M-GDL (5) and BPP (3) are manufactured from the same metal in order to prevent galvanic corrosion. In the embodiment illustrated in Figures 4-7, the M-GDL (5) and BPP (3) are both manufactured from either titanium metal or stainless steel. Also, the M-GDL (5) has an outer perimeter that substantially corresponds with an outer perimeter of the BPP (3) so that the M-GDL (5) and BPP (3) have substantially equivalent major dimensions in the laminate.

At least a surface of the M-GDL (5) opposite the BPP (3) is coated with polytetrafluoroethylene (PTFE) over the diffusion area (19). The coating serves to enhance the hydrophobicity of the diffusion area (19) and assist in directing water out of the fuel cell in use.

The M-GDL (5) and BPP (3) are arranged side by side to adjoin each other and so form a laminate. Their interface includes the diffusion area (19) of the M-GDL (5) and the flow field (18) of the BPP (3) so that the apertures (21) of the diffusion area (19) are in fluid communication with at least some of the gas flow channels (13). The interface also includes the frame of the M-GDL and a periphery of the BPP (3) that surrounds the flow field (18).

The M-GDL (5) and BPP (3) are provided with aligned eyelets (29) through which fuel gases (including hydrogen gas and air) and coolant enter or exhaust the fuel cell.

Importantly, the M-GDL (5) is laminated to the BPP (3) by welding on the frame area of the M-GDL and BPP so as to create a fluid impervious seal about the flow field (18). The welding is provided along a weld area or line (27) that surrounds the flow field area (18) and diffusion area (19). Furthermore, each land (15) is also welded to the M-GDL (5). In addition to surrounding the flow field area (18) the weld line (27) also extends to surround the eyelets (17) through which fuel gases (including hydrogen gas and air) and coolant enter or exhaust the fuel cell.

The welding serves to seal the interface between the BPP (3) and M-GDL (5) and obviates the need for a gasket or similar seal. This enables the M-GDL-BPP laminate to have a reduced thickness and enhances the electrical contact between the BPP (3) and M-GDL (5) in the area over the channeled surface (18). It also simplifies assembly and construction considerably, particularly in that alignment of a gasket with the M-GDL and BPP is not required.

In this embodiment ultrasonic welding was used. The adjoining BPP (3) and M-GDL (5) are simply placed between a pair of plates (not shown) of an ultrasonic welder (not shown) for a suitable period of time and any abutting surfaces become welded together. The process is quick and simple and provides a highly effective seal. However, it will be appreciated that any suitable method of welding could be used, including diffusion welding.

It has been found that a high degree of electrical conductivity exists between the BPP (3) and M-GDL (5) after welding. This suggests that the PTFE coating is at least partially eroded or broken down in at least some areas as a result of the welding.

The catalyst coated membrane (CCM) (7) is provided adjacent the M-GDL (5) on an opposite side to the BPP (3). The CCM (7) has a catalyst area (31) on which a suitable catalyst, such as a platinum catalyst, is coated. A catalyst-free area (33) surrounds the catalyst area (31) and forms an inactive frame thereabout. The CCM (7) is formed out of a polymeric material, such as a Nafion® (Du Pont®, U.S.A.) polymer, and has a catalyst area (31) and a catalyst-free area (33) on both major opposed sides. The CCM (7) is positioned against the M-GDL (5) so that the gas flow channels (13) of the BPP (3) and the apertures (21) of the M-GDL (5) are in flow communication with the catalyst area (31).

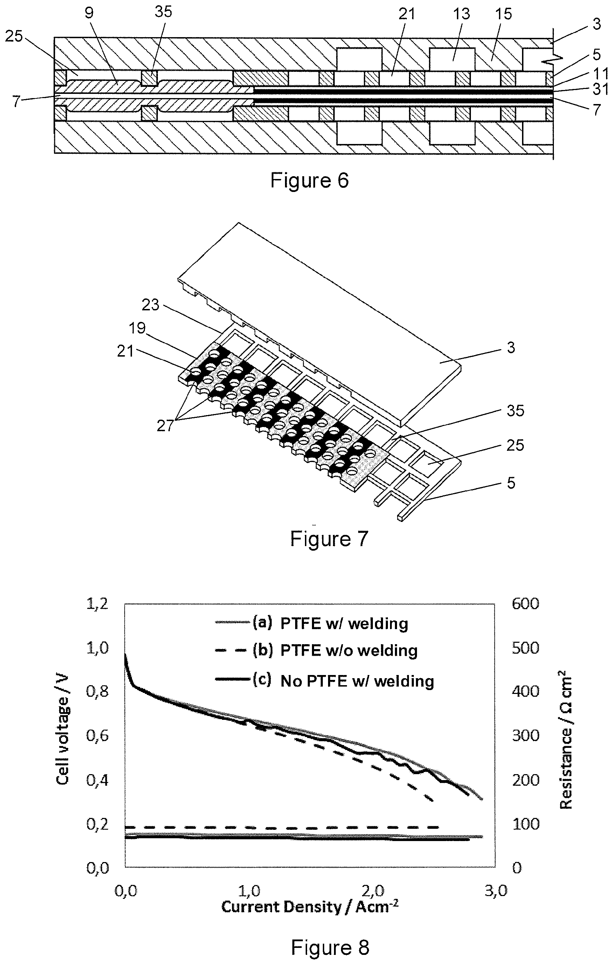

As shown in Figure 4, the gasket (9) is provided between the frame (23) of the M-GDL (5) and the catalyst-free area (33) of the CCM (7) and surrounding the diffusion area (19) of the M-GDL (5) and the catalyst area (31) of the CCM (7). The gasket (9) is manufactured from a solid polymeric material that deforms when compressed. In this embodiment the gasket is made from a suitable deformable polymeric material, such as silicone, fluoric polymer (e.g. PTFE), rubber, or hydrocarbon. When the fuel cell component (1) is assembled, compression of the frame area (23) against the catalyst-free area (33) causes compression of the gasket (9) which results in it bulging at least partially into the holes (25) in the frame area (23). In so doing the gasket (9) forms a fluid impervious seal around the catalyst area (31) that prevents hydrogen gas and air from leaking between the M-GDL (5) and CCM (7) in use. As the gasket (9) bulges into the holes (25), greater contact is made between the gasket (9) and the grid formations (35) defining the holes (25) and this serves to enhance the integrity of the seal that is formed. The gasket (9) has a thickness of from about 10 to about 100 µm, preferably from about 20 to about 50 µm. Typically, the gasket thickness is about 5-10 µm thicker than the sum of the thicknesses of the catalyst layer (31) and MPL (11) in an uncompressed state. When the frame area (23) is compressed against the catalyst-free area (33), the catalyst area (31), MPL (11) and gasket (9) are all compressed so that the gasket (9) has a thickness that is approximately equivalent to the combined thicknesses of the catalyst area (31) and MPL (11), as shown in Figure 6. Compression of the catalyst area (31) against the MPL (11) reduces the contact resistance between them, and also reduces the contact resistance between the M-GDL (5) and MPL (11). This enhances the overall electrical conductivity of the component (1).

The ability of the CCM (7) to move closer to the M-GDL (5) during compression, as a result of the holes (25) and deformable gasket (9), represents an advantage over prior art fuel cells that have a gasket that is not able to compress for lack of holes in the M-GDL. The fuel cell component of the present invention is also simpler and less expensive to assemble than fuel cells having an O-ring gasket.

The MPL (11) is interposed between the catalyst area (31) of the CCM (7) and the diffusion area (19) of the M-GDL (5), and includes a carbon substrate having hydrophobic particles interspersed therein. The carbon substrate may be provided by carbon nanoparticles and the hydrophobic particles may be provided by PTFE sub-micron sized particles. The MPL may be provided as a porous sheet or may be coated on the CCM side of the M-GDL. PTFE is used as the hydrophobic polymer in this embodiment. The MPL (11) serves to direct water away from the catalyst area (31) of the CCM (7) in use, whilst also providing an electrically conductive connection between the diffusion area (19) of the M-GDL (5) and the catalyst area (31) of the CCM (7). Furthermore, the MPL (11) can assist in distributing gases uniformly onto the catalyst area (31) from the holes in the diffusion area (19) of the M-GDL (5). In addition, the MPL can protect against galvanic corrosion between the different metallic materials of the M-GDL (5) and catalyst area (31) by preventing direct contact between these components. The MPL (11) has a thickness of from about 10 to about 50 µm, and preferably from about 20 to about 30 µm.

The fuel cell component (1) of the present invention solves the problem of poor electrical contact between a hydrophobic polymer coated M-GDL (5) and a BPP (3). By firstly coating the whole surface of the diffusion area (19) of the M-GDL (5) with PTFE, and then welding the M-GDL (5) to the BPP (3) about the gas flow channels (13) and at least partially along the lands (15), it appears that the PTFE coating at the lines of welding (27) is degraded to a sufficient extent to establish good electrical conductivity between the M-GDL (5) and BPP (3). The contact resistance attributable to the welded interfaces of the lands and flow field area is notably reduced by the welding.

The decomposition temperature of PTFE is generally 250-600 °C. Decomposition of the PTFE depends on the type of PTFE, the weld-processing time, the thermal conductivity of the M-GDL (5) and BPP (3), and the welding equipment used. When ultrasonic-welding (MWX100, Branson Ultrasonics, CT, USA) is utilized on a M-GDL which is 30µm thick and made from SS316L and a BPP which has 200 µm wide lands and 200 µm wide grooves and made of SS316L, the PTFE coating is sufficiently degraded for the contact resistance to be reduced and the electrical conductivity to be increased relative to a PTFE-coated, unwelded M-GDL-BPP laminate.

Figure 8 shows the polarization curves for (a) PTFE coating with ultrasonic-welding, (b) PTFE coating without any welding, wherein the M-GDL and BPP are unlaminated, and (c) uncoated M-GDL with ultrasonic-welding. All the experiments used a commercial CCM (Ion Power, DW, USA) with a 25 µm thick MPL coated on the M-GDL. In Figure 8, (a) shows less resistance and less flooding in its performance, (b) shows higher resistance but less flooding, and (c) shows less resistance but higher flooding. These results indicate that the ultrasonic-welding on the stainless steel 316L M-GDL and BPP can degrade the PTFE coating at the line of welding without degrading the PTFE coating at unwelded areas. The results also demonstrate that welding reduces contact resistance between the diffusion area and the flow field area relative to an unlaminated M-GDL and BPP.

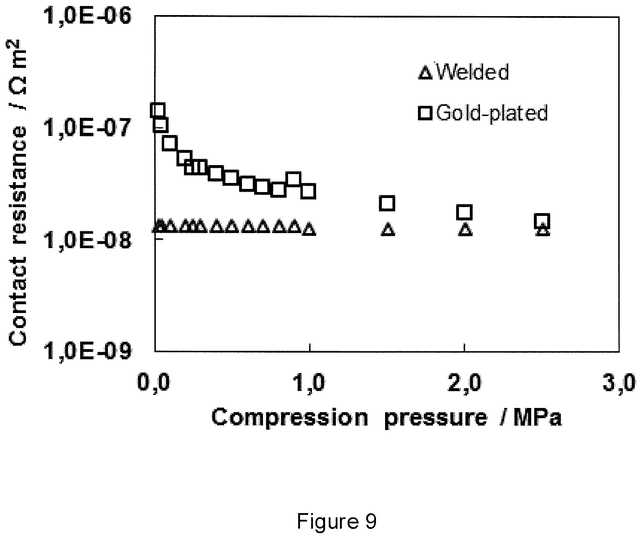

Figure 9 shows the results obtained from experiments in which a M-GDL and a BPP are compressed together at a range of applied pressures and the contact resistances measured at each applied pressure. Differences in contact resistance between a M-GDL and a BPP with (A) gold plating on contacting surfaces of both the M-GDL and BPP, and with (B) welding are demonstrated. Gold plating is commonly used in the art to reduce contact resistance between two contacting surfaces of a fuel cell. At all applied pressures, contact resistance between the welded electrical contacts was considerably lower than the contact resistance between the gold plated contacts. Furthermore, contact resistance of the welded electrodes was largely unaffected by applied pressure. Even at applied pressures below 0.05 MPa, the contact resistance of the welded electrodes was less than 1 x 10⁻⁷ Ωm².

It will be appreciated that many other embodiments of a fuel cell component exist which fall within the scope of the invention. For example, the holes (25) in the frame area (23) may be blind and need not extend through the M-GDL (5). They could be socket-like or be formed by depressions in the surface of the frame (23) that do not extend through the M-GDL (5). In this case the grid formations (35) are provided on an opposite surface of the frame area (23) to that of the BPP (3). Furthermore, the M-GDL (5) and BPP (3) may be manufactured from the same or different metals or metal alloys, and the metals or metal alloys may be selected from copper, stainless steel, aluminium and titanium.

In a further embodiment of the invention, the diffusion area (19) of the M-GDL (5) may be coated with gold on the surface in contact with the MPL (11) in order to increase electrical contact and reduce corrosion between the M-GDL (5) and MPL (11). The gold coating may be applied by any suitable method, including electro-plating, ink-jet with binder polymers, sputtering, or chemical or physical vapor deposition.

In a yet further embodiment of the invention, one or both of the M-GDL (5) and BPP (3) may not be coated in a hydrophobic polymer, or they may be coated in a non-PTFE hydrophobic polymer.

In a still further embodiment, the gasket (9) may be formed using a curable liquid manufactured from a liquid polymeric material, such as silicone, and which is applied to either or both of the BPP and M-GDL as a liquid. In this embodiment, the grid configuration (35) in the frame area (23) of the M-GDL (5) is able to interact with the curable liquid gasket in a similar manner to which in interacts with the solid gasket (9). At least a part of the curable liquid gasket is received into the holes (25) to form a seal when the M-GDL (5) and CCM (7) are compressed together.

Throughout the specification and claims unless the contents requires otherwise the word 'comprise' or variations such as 'comprises' or 'comprising' will be understood to imply the inclusion of a stated integer or group of integers but not the exclusion of any other integer or group of integers.

## Claims

1. A component (1) for a fuel cell including a metal gas diffusion layer (M-GDL) plate (5) and a bipolar plate (BPP) (3), the M-GDL (5) having a diffusion area (19) in which a plurality of apertures (21) extend through the M-GDL (5) and a frame area (23) surrounding the diffusion area (19), and the BPP (3) having a plurality of gas flow channels (13) on a surface thereof to define a flow field area (18), and **characterised in that** the frame area (23) is laminated to the BPP (3) to create a fluid impervious seal between the M-GDL (5) and BPP (3) about the frame area (23).

2. The fuel cell component (1) as claimed in claim 1, wherein the lamination is provided by welding or soldering.

3. The fuel cell component (1) as claimed in claim 1 or claim 2, wherein the frame area (23) has a grid configuration with a plurality of holes (25) defined in the grid configuration.

4. A component (1) for a fuel cell including a metal gas diffusion layer (M-GDL) plate (5) and a bipolar plate (BPP) (3), the M-GDL (5) having a diffusion area (19) in which a plurality of apertures (21) extend through the M-GDL (5) and a frame area (23) surrounding the diffusion area (19), the frame area (23) having a grid configuration with a plurality of holes (25) defined in the grid configuration, and the BPP (3) having a plurality of gas flow channels (13) on a surface thereof to define a flow field area (18), and **characterised in that** the M-GDL (5) is laminated to the BPP (3).

5. The fuel cell component (1) as claimed in claim 3 or claim 4, wherein a catalyst coated membrane (CCM) (7) is provided adjacent the M-GDL (5) on an opposite side to the BPP (3), the CCM (7) having a catalyst area (31) and a catalyst-free area (33) with the catalyst-free area (33) surrounding the catalyst area (31), and a gasket (9) is provided between the frame area (23) of the M-GDL (5) and the catalyst-free area (33) of the CCM (7), the gasket (9) surrounding the diffusion area (19) of the M-GDL (5) and catalyst area (31) of the CCM (7), wherein the gasket (9) is deformable when compressed and arranged to bulge at least partially into the holes (25) defined in the grid configuration.

6. The fuel cell component (1) as claimed in any one of claims 1 to 5, wherein sections of the M-GDL (5) opposite the channels (13) of the flow field area (18) are coated with a hydrophobic polymer.

7. The fuel cell component (1) as claimed in any one of claims 1 to 6, wherein sections of the M-GDL (5) in contact with the flow field area (18) are either partially coated with a hydrophobic polymer or uncoated.

8. The fuel cell component (1) as claimed in any one of claims 1 to 7, wherein the M-GDL (5) is coated with gold on at least a surface opposite the surface laminated to the BPP (3).

9. A method of manufacturing a component (1) of a fuel cell, the method including aligning a metal gas diffusion layer (M-GDL) plate (5) and a bipolar plate (BPP) (3), the M-GDL (5) having a diffusion area (19) in which a plurality of apertures (21) extending through the M-GDL (5) are located and having a frame area (23) surrounding the diffusion area (19), and the BPP (3) having a plurality of gas flow channels (13) defining a flow field area (18) on a surface thereof, and laminating the frame area (23) to the BPP (3) to create a fluid impervious seal between the M-GDL (5) and BPP (3) about the frame area (23).

10. A method as claimed in claim 9, wherein the laminating is provided by welding or soldering.

11. A method as claimed in claim 9 to claim 10, wherein the frame area (23) has a grid configuration with a plurality of holes (25) defined in the grid configuration.

12. The method as claimed in claim 11, wherein a catalyst coated membrane (CCM) (7) is provided adjacent the M-GDL (5) on an opposite side to the BPP (3), the CCM (7) having a catalyst area (31) and a catalyst-free area (33) with the catalyst-free area (33) surrounding the catalyst area (31), and a gasket (9) is provided between the frame area (23) of the M-GDL (5) and the catalyst-free area (33) of the CCM (7), the gasket (9) surrounding the diffusion area (19) of the M-GDL (5) and catalyst area (31) of the CCM (7), wherein the gasket (9) is deformable when compressed and arranged to bulge at least partially into the holes (25) defined in the grid configuration.

13. The method as claimed in any one of claims 9 to 12, wherein sections of the M-GDL (5) opposite the channels (13) of the flow field area (18) are coated with a hydrophobic polymer.

14. The method as claimed in any one of claims 9 to 13, wherein sections of the M-GDL (5) in contact with the flow field area (18) are either partially coated with a hydrophobic polymer or uncoated.

## Patentansprüche

1. Komponente (1) für eine Brennstoffzelle, die eine Metallgasdiffusionsschicht(M-GDL)-Platte (5) und eine bipolare Platte (BPP) (3) einschließt, wobei die M-GDL (5) einen Diffusionsbereich (19), in dem sich eine Vielzahl von Öffnungen (21) durch die M-GDL (5) erstrecken, und einen Rahmenbereich (23), der den Diffusionsbereich (19) umgibt, aufweist und wobei die BPP (3) eine Vielzahl von Gasströmungskanälen (13) auf einer Fläche davon aufweist, um einen Strömungsfeldbereich (18) zu definieren, und **dadurch gekennzeichnet, dass** der Rahmenbereich (23) auf die BPP (3) laminiert ist, um eine fluiddichte Versiegelung zwischen der M-GDL (5) und der BPP (3) um den Rahmenbereich (23) herzustellen.

2. Brennstoffzellenkomponente (1) nach Anspruch 1, wobei die Laminierung durch Schweißen oder Löten bereitgestellt wird.

3. Brennstoffzellenkomponente (1) nach Anspruch 1 oder Anspruch 2, wobei der Rahmenbereich (23) eine Gitterauslegung mit einer Vielzahl von Löchern (25), die in der Gitterauslegung definiert sind, aufweist.

4. Komponente (1) für eine Brennstoffzelle, die eine Metallgasdiffusionsschicht(M-GDL)-Platte (5) und eine bipolare Platte (BPP) (3) einschließt, wobei die M-GDL (5) einen Diffusionsbereich (19), in dem sich eine Vielzahl von Öffnungen (21) durch die M-GDL (5) erstrecken, und einen Rahmenbereich (23), der den Diffusionsbereich (19) umgibt, aufweist, wobei der Rahmenbereich (23) eine Gitterauslegung mit einer Vielzahl von Löchern (25), die in der Gitterauslegung definiert sind, aufweist und wobei die BPP (3) eine Vielzahl von Gasströmungskanälen (13) auf einer Fläche davon aufweist, um einen Strömungsfeldbereich (18) zu definieren, und **dadurch gekennzeichnet, dass** die M-GDL (5) auf die BPP (3) laminiert ist.

5. Brennstoffzellenkomponente (1) nach Anspruch 3 oder Anspruch 4, wobei eine katalysatorbeschichtete Membran (CCM) (7) angrenzend an den M-GDL (5) auf einer der BPP (3) gegenüberliegenden Seite bereitgestellt ist, wobei die CCM (7) einen Katalysatorbereich (31) und einen katalysatorfreien Bereich (33) aufweist, wobei der katalysatorfreie Bereich (33) den Katalysatorbereich (31) umgibt und wobei zwischen dem Rahmenbereich (23) der M-GDL (5) und dem katalysatorfreien Bereich (33) der CCM (7) eine Dichtung (9) bereitgestellt ist, wobei die Dichtung (9) den Diffusionsbereich (19) der M-GDL (5) und den Katalysatorbereich (31) der CCM (7) umgibt, wobei die Dichtung (9) verformbar ist, wenn sie zusammengedrückt wird, und angeordnet ist, sich mindestens teilweise in die Löcher (25), die in der Gitterauslegung definiert sind, zu wölben.

6. Brennstoffzellenkomponente (1) nach einem der Ansprüche 1 bis 5, wobei Abschnitte der M-GDL (5) gegenüber den Kanälen (13) des Strömungsfeldbereichs (18) mit einem hydrophoben Polymer beschichtet sind.

7. Brennstoffzellenkomponente (1) nach einem der Ansprüche 1 bis 6, wobei Abschnitte der M-GDL (5), die mit dem Strömungsfeldbereich (18) in Kontakt sind, entweder teilweise mit einem hydrophoben Polymer beschichtet oder unbeschichtet sind.

8. Brennstoffzellenkomponente (1) nach einem der Ansprüche 1 bis 7, wobei die M-GDL (5) auf mindestens einer Fläche, die der Fläche, die auf die BPP (3) laminiert ist, gegenüberliegt, mit Gold beschichtet ist.

9. Verfahren zum Herstellen einer Komponente (1) einer Brennstoffzelle, wobei das Verfahren das Ausrichten einer Metallgasdiffusionsschicht(M-GDL)-Platte (5) und einer bipolaren Platte (BPP) (3) einschließt, wobei die M-GDL (5) einen Diffusionsbereich (19) aufweist, in dem sich eine Vielzahl von Öffnungen (21) befinden, die sich durch die M-GDL (5) erstrecken, und einen Rahmenbereich (23) aufweist, der den Diffusionsbereich (19) umgibt, und wobei die BPP (3) eine Vielzahl von Gasströmungskanälen (13) aufweist, die auf einer Fläche davon einen Strömungsfeldbereich (18) definieren, und Laminieren des Rahmenbereichs (23) auf die BPP (3), um eine fluiddichte Versiegelung zwischen der M-GDL (5) und der BPP (3) um den Rahmenbereich (23) herzustellen.

10. Verfahren nach Anspruch 9, wobei das Laminieren durch Schweißen oder Löten bereitgestellt wird.

11. Verfahren nach Anspruch 9 bis Anspruch 10, wobei der Rahmenbereich (23) eine Gitterauslegung mit einer Vielzahl von Löchern (25), die in der Gitterauslegung definiert sind, aufweist.

12. Verfahren nach Anspruch 11, wobei eine katalysatorbeschichtete Membran (CCM) (7) angrenzend an den M-GDL (5) auf einer der BPP (3) gegenüberliegenden Seite bereitgestellt ist, wobei die CCM (7) einen Katalysatorbereich (31) und einen katalysatorfreien Bereich (33) aufweist, wobei der katalysatorfreie Bereich (33) den Katalysatorbereich (31) umgibt und wobei zwischen dem Rahmenbereich (23) der M-GDL (5) und dem katalysatorfreien Bereich (33) der CCM (7) eine Dichtung (9) bereitgestellt ist, wobei die Dichtung (9) den Diffusionsbereich (19) der M-GDL (5) und den Katalysatorbereich (31) der CCM (7) umgibt, wobei die Dichtung (9) verformbar ist, wenn sie zusammengedrückt wird, und angeordnet ist, sich mindestens teilweise in die Löcher (25), die in der Gitterauslegung definiert sind, zu wölben.

13. Verfahren nach einem der Ansprüche 9 bis 12, wobei Abschnitte der M-GDL(5) gegenüber den Kanälen (13) des Strömungsfeldbereichs (18) mit einem hydrophoben Polymer beschichtet sind.

14. Verfahren nach einem der Ansprüche 9 bis 13, wobei Abschnitte der M-GDL (5), die mit dem Strömungsfeldbereich (18) in Kontakt sind, entweder teilweise mit einem hydrophoben Polymer beschichtet oder unbeschichtet sind.

## Revendications

1. Composant (1) pour une pile à combustible incluant une plaque sous forme de couche de diffusion de gaz métallique (M-GDL) (5) et une plaque bipolaire (BPP) (3), la M-GDL (5) comportant une zone de diffusion (19) à l'intérieur de laquelle une pluralité d'ouvertures (21) s'étendent au travers de la M-GDL (5) et une zone de cadre (23) qui entoure la zone de diffusion (19), et la BPP (3) comportant une pluralité de canaux d'écoulement de gaz (13) sur une surface de celle-ci pour définir une zone de champ d'écoulement (18), et **caractérisé en ce que** la zone de cadre (23) est empilée sur la BPP (3) pour créer une étanchéité imperméable aux fluides entre la M-GDL (5) et la BPP (3) autour de la zone de cadre (23).

2. Composant de pile à combustible (1) selon la revendication 1, dans lequel l'empilement est réalisé par soudage ou par brasage.

3. Composant de pile à combustible (1) selon la revendication 1 ou la revendication 2, dans lequel la zone de cadre (23) présente une configuration sous forme de grille avec une pluralité de trous (25) qui sont définis dans la configuration sous forme de grille.

4. Composant (1) pour une pile à combustible incluant une plaque sous forme de couche de diffusion de gaz métallique (M-GDL) (5) et une plaque bipolaire (BPP) (3), la M-GDL (5) comportant une zone de diffusion (19) à l'intérieur de laquelle une pluralité d'ouvertures (21) s'étendent au travers de la M-GDL (5) et une zone de cadre (23) qui entoure la zone de diffusion (19), la zone de cadre (23) présentant une configuration sous forme de grille avec une pluralité de trous (25) qui sont définis dans la configuration sous forme de grille, et la BPP (3) comportant une pluralité de canaux d'écoulement de gaz (13) sur une surface de celle-ci pour définir une zone de champ d'écoulement (18), et **caractérisé en ce que** la M-GDL (5) est empilée sur la BPP (3).

5. Composant de pile à combustible (1) selon la revendication 3 ou la revendication 4, dans lequel une membrane revêtue de catalyseur (CCM) (7) est prévue de façon adjacente à la M-GDL (5) sur un côté opposé à la BPP (3), la CCM (7) comportant une zone de catalyseur (31) et une zone exempte de catalyseur (33), la zone exempte de catalyseur (33) entourant la zone de catalyseur (31), et un joint d'étanchéité (9) est prévu entre la zone de cadre (23) de la M-GDL (5) et la zone exempte de catalyseur (33) de la CCM (7), le joint d'étanchéité (9) entourant la zone de diffusion (19) de la M-GDL (5) et la zone de catalyseur (31) de la CCM (7), dans lequel le joint d'étanchéité (9) peut être déformé lorsqu'il est comprimé et agencé pour se renfler au moins partiellement à l'intérieur des trous (25) qui sont définis dans la configuration sous forme de grille.

6. Composant de pile à combustible (1) selon l'une quelconque des revendications 1 à 5, dans lequel des sections de la M-GDL (5) qui sont opposées aux canaux (13) de la zone de champ d'écoulement (18) sont revêtues d'un polymère hydrophobe.

7. Composant de pile à combustible (1) selon l'une quelconque des revendications 1 à 6, dans lequel des sections de la M-GDL (5) qui sont en contact avec la zone de champ d'écoulement (18) soit sont partiellement revêtues d'un polymère hydrophobe, soit sont non revêtues.

8. Composant de pile à combustible (1) selon l'une quelconque des revendications 1 à 7, dans lequel la M-GDL (5) est revêtue d'or sur au moins une surface qui est opposée à la surface qui est empilée sur la BPP (3).

9. Procédé de fabrication d'un composant (1) d'une pile à combustible, le procédé incluant l'alignement d'une plaque sous forme de couche de diffusion de gaz métallique (M-GDL) (5) et d'une plaque bipolaire (BPP) (3), la M-GDL (5) comportant une zone de diffusion (19) à l'intérieur de laquelle sont localisées une pluralité d'ouvertures (21) qui s'étendent au travers de la M-GDL (5), et comportant une zone de cadre (23) qui entoure la zone de diffusion (19), et la BPP (3) comportant une pluralité de canaux d'écoulement de gaz (13) qui définissent une zone de champ d'écoulement (18) sur une surface de celle-ci, et l'empilement de la zone de cadre (23) sur la BPP (3) pour créer une étanchéité imperméable aux fluides entre la M-GDL (5) et la BPP (3) en relation avec la zone de cadre (23).

10. Procédé selon la revendication 9, dans lequel l'empilement est réalisé par soudage ou par brasage.

11. Procédé selon la revendication 9 à la revendication 10, dans lequel la zone de cadre (23) présente une configuration sous forme de grille avec une pluralité de trous (25) qui sont définis dans la configuration sous forme de grille.

12. Procédé selon la revendication 11, dans lequel une membrane revêtue de catalyseur (CCM) (7) est prévue de façon adjacente à la M-GDL (5) sur un côté opposé à la BPP (3), la CCM (7) comportant une zone de catalyseur (31) et une zone exempte de catalyseur (33), la zone exempte de catalyseur (33) entourant la zone de catalyseur (31), et un joint d'étanchéité (9) est prévu entre la zone de cadre (23) de la M-GDL (5) et la zone exempte de catalyseur (33) de la CCM (7), le joint d'étanchéité (9) entourant la zone de diffusion (19) de la M-GDL (5) et la zone de catalyseur (31) de la CCM (7), dans lequel le joint d'étanchéité (9) peut être déformé lorsqu'il est comprimé et agencé pour se renfler au moins partiellement à l'intérieur des trous (25) qui sont définis dans la configuration sous forme de grille.

13. Procédé selon l'une quelconque des revendications 9 à 12, dans lequel des sections de la M-GDL (5) qui sont opposées aux canaux (13) de la zone de champ d'écoulement (18) sont revêtues d'un polymère hydrophobe.

14. Procédé selon l'une quelconque des revendications 9 à 13, dans lequel des sections de la M-GDL (5) qui sont en contact avec la zone de champ d'écoulement (18) soit sont partiellement revêtues d'un polymère hydrophobe, soit sont non revêtues.
